# EUROPEAN PATENT APPLICATION

(11) **EP 1 662 459 A1**
(43) Date of publication of application: **31.05.2006**
(21) Application number: 03818556.7
(22) Date of filing: 02.09.2003
(51) Int. Cl.: G08G 1/16, G06T 1/00, H04N 7/18

(54) **VEHICLE-MOUNTED IMAGE PROCESSOR**

(71) Applicant: FUJITSU LIMITED, Kawasaki-shi, Kanagawa 211-8588 (JP)
(72) Inventor: TAKASHIMA, Tomonobu, c/o Fujitsu Limited, Kawasaki-shi, KanagaWA 211-8588 (JP); TOHNO, Masatoshi, c/o Fujitsu Limited, Kawasaki-shi, Kanagawa 211-8588 (JP); KATAGIRI, Taku, c/o Fujitsu Limited, Kawasaki-shi, Kanagawa 211-8588 (JP); UENO, Daisuke, c/o Fujitsu Limited, Kawasaki-shi, Kanagawa 211-8588 (JP); OMI, Tadao, c/o Fujitsu Limited, Kawasaki-shi, Kanagawa 211-8588 (JP)
(74) Representative: Hitching, Peter Matthew
(86) International application number: PCT/JP2003/011196
(87) International publication number: WO 2005/024754

(57) **Abstract**

A vehicle-mounted image processor in which image analysis for judging the possibility of a danger, e.g., crash, can be carried out accurately even when the speed of a vehicle is high. The vehicle-mounted image processor comprises a means for storing a specified volume of image data delivered from a vehicle-mounted camera, a means performing image analysis only of the image data in a specified range of the latest image data stored in the image data storage means, and a processing object control means for allowing the image analysis means to grasp the moving speed of the vehicle, to specify an object being processed such that the size and the position thereof has a negative correlation with the moving speed of the vehicle in the image data stored in the image data storage means, and to perform image analysis on the image data in the specified range.

## Description

### Technical Field

The present invention relates to a vehicle-mounted image processor for analyzing the image data photographed by a vehicle-mounted camera.

### Background Art

In recent years, various technologies for assisting the driving have been developed as well known. For example, a head up display (e.g., refer to patent document 1) for displaying the information (speed, etc.) required for driving on the front glass has been developed. Also, an apparatus for informing the driver of the possibility of a danger of crash has been developed.

The apparatus for informing the driver of the possibility of a danger of crash (hereinafter designated as a crash preventing apparatus) comprises the type which judges the possibility of a danger of crash by analyzing the image data obtained by a camera mounted on the vehicle and the type which employs a radar, as well known. The crash preventing apparatus of former type requires the software image analysis. Therefore, the crash preventing apparatus of former type is configured to treat the image data obtained by the vehicle-mounted camera as data with lower resolution, so that the image analysis may be completed within a predetermined period of time (usually the time almost as long as the image data output period of the camera) (e. g. , the apparatus extracts one pixel data for every four pixel data from the image data of 640x320 pixels and processes the extracted image data of 320x160 pixels).

With the above configuration of the apparatus, the existent crash preventing apparatus of the type of analyzing the image data may judge the possibility of a danger of crash erroneously, or make a warning only after the crash can not be avoided, when the speed of the vehicle mounting the self-apparatus is higher, resulting in a malfunction.

The reason why the existent crash preventing apparatus is configured in the above manner will be simply described below.

As the vehicle speed is higher, the existent range of object required to monitor its behavior (distance to the self vehicle) becomes broader, but the total number of pixel data regarding the certain object (vehicle) included in the image data outputted from the camera is smaller as the distance between the object and the self vehicle increases. And it is essentially difficult to specify the object from a small volume of image data, and in the existent crash preventing apparatus the image data outputted from the camera is converted into less information amount before making the image analysis. Therefore, the existent crash prevention apparatus may make the above malfunction.

Patent document 1 Japanese Patent Laid-Open No. 11-119147

### Disclosure of the Invention

This invention has been achieved in the light of these current circumstances, and it is an object of the invention to provide a vehicle-mounted image processor for performing image analysis for judging the possibility of a danger, e.g., crash, to obtain the accurate results at any time.

In order to accomplish the above object, the present invention provides a vehicle-mounted image processor mounted on a vehicle, together with a camera for periodically delivering the image data regarding a landscape image in a direction where the vehicle advances, comprising image data storage means for storing a specified volume of image data delivered from the vehicle-mounted camera, image analyzing means for performing image analysis only of the image data in a specified range of the latest image data stored in the image data storage means, and processing object control means for allowing the image analyzing means to grasp the moving speed of the vehicle, to specify an object being processed such that the size and the position thereof has a negative correlation with the moving speed of the vehicle in the image data stored in the image data storage means, and to perform image analysis on the image data in the specified range.

That is, in the vehicle-mounted image processor of the invention, the range (size or position) of image data to be processed for image analysis changes according to the moving speed of the vehicle (if the moving speed of the vehicle is increased, the size of image data to be processed for image analysis is smaller). Accordingly, this vehicle-mounted image processor is an apparatus in which image data delivered from the camera is not converted into lower resolution when the moving speed of the vehicle is high, namely, in which image processing for judging the possibility of a danger, e.g., crash can be carried out accurately even when the speed of the vehicle is high.

In realizing the vehicle-mounted image processor of the invention, the processing obj ect control means allows the image analyzing means to perform image analysis of the image data in a specified range of the image data for each rank of the moving speed. Also, to avoid adverse influence of a rapid variation in the moving speed of the vehicle, the processing object control means allows the image analyzing means to grasp an average value of the moving speed of the vehicle, to specify an object being processed such that the size and the position thereof has a negative correlation with the average value of the moving speed of the vehicle in the image data stored in the image data storage means, and to perform image analysis on the image data in the specified range.

Also, in realizing the vehicle-mounted image processor of the invention, the processing object control means allows the image analyzing means to grasp the yaw rate and the moving speed of the vehicle, to specify an object being processed such that the vertical size has a negative correlation with the moving speed of the vehicle, and the horizontal size has a positive correlation with the yaw rate of the vehicle in the image data stored in the image data storage means, and to perform image analysis on the image data in the specified range.

According to another form of the invention, there is provided a vehicle-mounted image processor mounted on a vehicle, together with a camera for periodically delivering the image data regarding a landscape image in a direction where the vehicle advances, comprising image data storage means for storing a specified volume of image data delivered from the vehicle-mounted camera, image analyzing means for performing a first image analysis of the latest image data stored in the image data storage means as the image data with a first resolution lower than the actual resolution, and a second image analysis of the image data in a specified range of the image data as the image data with a resolution lower than or equal to the actual resolution and higher than the first resolution; and processing object control means for allowing the image analyzing means to grasp the advancing direction of the vehicle, and perform the first image analysis of the latest image data stored in the image data storage means and the second image analysis of the image data in a range according to the grasped advancing direction.

That is, in the vehicle-mounted image processor according to this form of the invention, the image analysis (second image analysis) of an important portion of the image data (portion corresponding to the range specified by the processing object control means) is performed for the image data with higher resolution than the image analysis (first image analysis) of the other portion. Accordingly, this vehicle-mounted image processor is an apparatus in which image analysis can be carried out without converting the important portion of image data into lower resolution, namely, in which image analysis for judging the possibility of a danger, e. g., crash can be carried out more accurately than the conventional apparatus.

### Brief Description of the Drawings

Figure 1 is an explanatory view showing the configuration and use form of a vehicle-mounted image processor according to a first embodiment of the present invention;
Figure 2 is an explanatory view of a yaw rate;
Figure 3 is an explanatory view of a vanishing point;
Figure 4 is an explanatory view of image range designating information outputted from an image processing range specifying section;
Figures 5A and 5B and Figure 6 are views for explaining the operation content of the vehicle-mounted image processor according to a vehicle speed rank n;
Figures 7 and 8 are views for explaining the operation content of the vehicle-mounted image processor according to the yaw rate rank m;
Figure 9 is a flowchart showing an operation procedure of the vehicle-mounted image processor; and
Figures 10A and 10B and Figures 11A and 11B are views for explaining the operation of the vehicle-mounted image processor according to a second embodiment of the invention.

### Best Mode for Carrying Out the Invention

### <First embodiment>

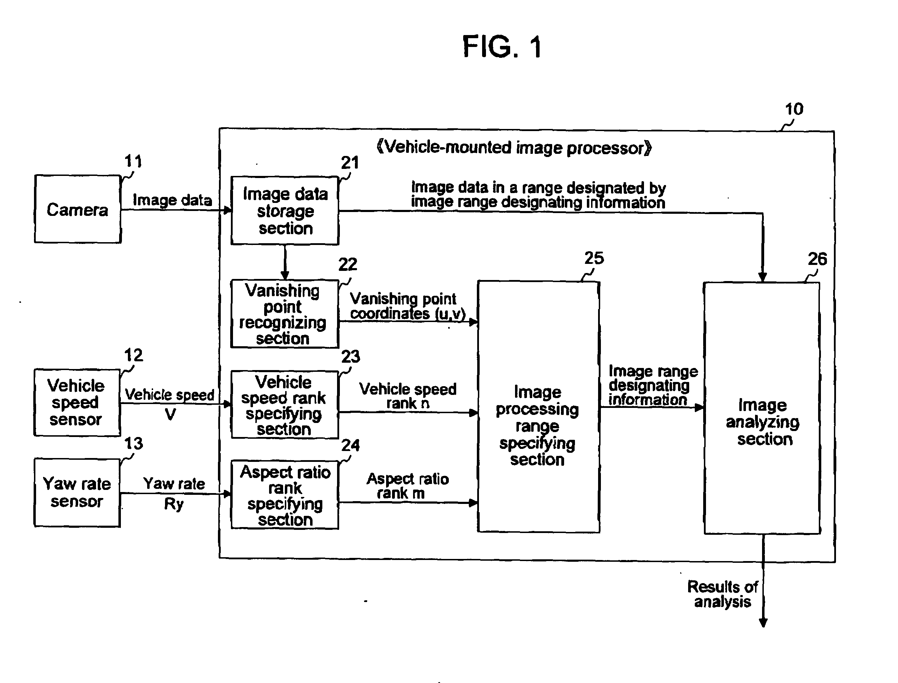

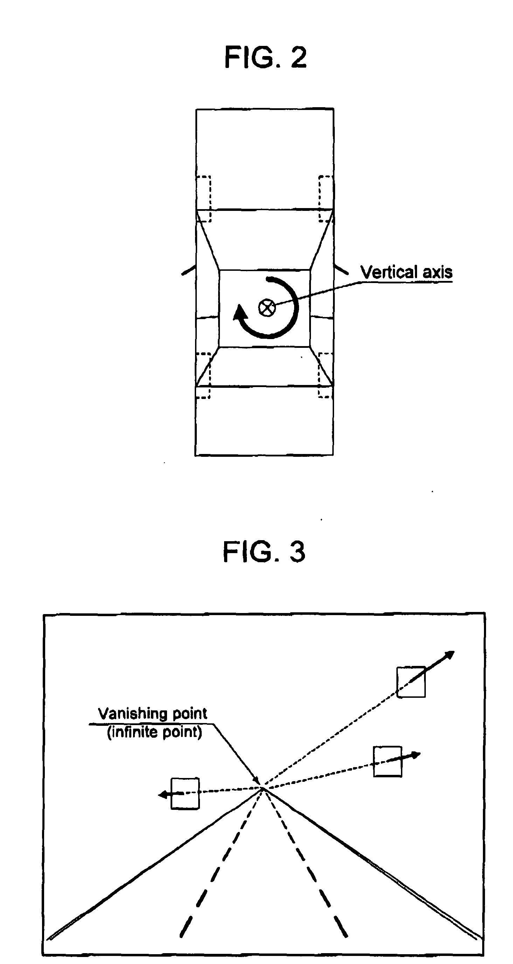

Referring to Figures 1 and 2, first of all, a vehicle-mounted image processor according to a first embodiment of the present invention will be outlined below.

As shown in Figure 1, the vehicle-mounted image processor 20 according to the first embodiment of the invention is connected to a camera 11, a vehicle speed sensor 12, and a yaw rate sensor 13.

The camera 11 connected to this vehicle-mounted image processor 20 is an image pickup device (CCD camera) mounted on the vehicle to photograph an image (landscape) in a direction where the vehicle advances. The vehicle speed sensor 12 is a device for detecting the vehicle speed V (unit of km/h) that is the speed of the vehicle, and outputting it. This vehicle speed sensor 12 is usually mounted on the vehicle from the beginning.

The yaw rate sensor 13 is a device for detecting the yaw rate Ry (rotational angular velocity, unit of rad/sec) of the vehicle around a vertical axis and outputting it, as typically shown in Figure 2.

And the vehicle-mounted image processor 20 may use the camera 11 which delivers the image data (color image data in this embodiment) of which the size (number of pixels) is 640x480 pixels periodically (every 1/30 seconds). Also, the vehicle-mounted image processor 20 processes the image data delivered from the camera 11 as a set of image data in which the X coordinate value is from -319 to 320 and the Y coordinate value is from -239 to 240. Further, the vehicle-mounted image processor 20 can operate without connecting the yaw rate sensor 13.

Supposing the above, the configuration and operation of the vehicle-mounted image processor 20 according to this embodiment will be more specifically described below.

In practice, the vehicle-mounted image processor 20 is a device (one kind of computer) in which an interface circuit for each external device (camera 11, vehicle speed sensor 12, and yaw rate sensor 13) is combined with a CPU, a ROM and a RAM. Referring firstly to Figure 1 showing a block diagram (functional block diagram) of the vehicle-mounted image processor 20, the configuration and operation of the vehicle-mounted image processor 20 according to this embodiment will be described below.

As shown in Figure 1, the vehicle-mounted image processor 20 comprises an image data storage section 21, a vanishing point recognizing section 22, a vehicle speed rank specifying section 23, an aspect ratio rank specifying section 24, an image processing range specifying section 25 and an image analyzing section 26.

The image data storage section 21 is a unit for storing the latest two images (two screens) of image data periodically delivered from the camera 11.

The vanishing point recognizing section 22 is a unit for acquiring and outputting the vanishing point coordinates (u, v) that are the coordinates of the vanishing point (infinite point) regarding the latest image data (image data most lately acquired from the camera 11), based on two pieces of image data stored in the image data storage section 21, synchronously with the image data output period of the camera 11.

The vanishing point (infinite point) means the point toward which the vehicle advances at that time in the image photographed by the camera 11, as typically shown in Figure 3. Also, the vanishing point recognizing section 22 acquires this vanishing point through a so-called optical flow extracting process.

The vehicle speed rank specifying section 23 is a unit for performing a process of calculating the temporal average value (noise data ignored) of the vehicle speed V [km/h] outputted from the vehicle speed sensor 12, and a process of calculating an integer value n (n=5 if n>5) where an inequality "10n≤v<20n" holds for the average value v (hereinafter designated as vehicle speed v) and outputting the vehicle speed rank n.

The aspect ratio rank specifying section 24 is a unit for performing a process of calculating the temporal average value (noise data ignored) of the yaw rate Ry [rad/sec] outputted from the yaw rate sensor 13, and a process of calculating an integer value m (m=5 if m>5) where an inequality "0.05m≤ ABS(ry)< 0.05(m+1)" (AHS(ry) is the absolute value of ry) holds for the average value ry (hereinafter designated as yaw rate ry) and outputting the aspect ratio rank m. This aspect ratio rank specifying section 24 outputs "0" as the aspect ratio rank m, if the yaw rate sensor 13 is not connected.

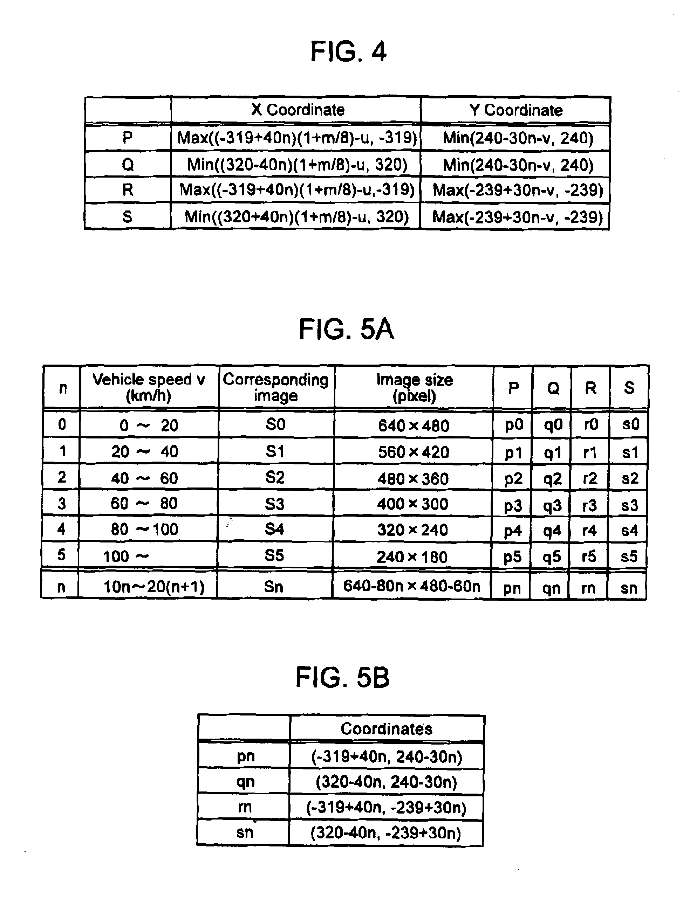

The image processing range specifying section 25 is a unit for generating the image range designating information of the contents as shown in Figure 4, based on the vanishing point coordinates (u, v) from the vanishing point recognizing section 22, the vehicle speed rank n from the vehicle speed rank specifying section 23 and the aspect ratio rank m from the aspect ratio rank specifying section 24.

That is, the image processing range specifying section 25 is a unit for generating the image range designating information including
Max((-319+40n) (1+m/8)-u,-319) as X coordinate value of P point,
Min(240-30n-v,240) as Y coordinate value of P point,
Min((320+40n) (1+m/8)-u,320) as X coordinate value of Q point,
Min(240-30n-v,240) as Y coordinate value of Q point
Max((-319+40n) (1+m/8)-u,-319) as X coordinate value of R point,
Min(240-30n-v,240) as Y coordinate value of R point,
Min((320+40n) (1+m/8)-u,320) as X coordinate value of S point,
Min(240-30n-v,240) as Y coordinate value of S point.

Max(α,β) and Min(α,β) are functions of outputting the larger value and the smaller value between α and β, respectively. Also, the image processing range specifying section 25 outputs the image range designating information that can be represented in the form of these functions, so that the pixel data regarding each of four points PQRS exists in the image data stored in the image data storage section 21 (the coordinate information regarding the non-existent pixel are not supplied to the image analyzing section 26).

The image analyzing section 26 is a unit for performing image analysis only of the image data in a specified range of the latest image data stored in the image data storage section 21, the range being specified by the image range designating information outputted from the image processing range specifying section 25 (range surrounded by four points PQRS with the coordinates included in the image range designating information), to specify what object exists in front of the self vehicle, and outputting (part of) the results of analysis. This image analyzing section 26 performs the analysis at the present time, using the results of analysis at the previous time (information regarding the size and position of object), and outputs the information indicating the possibility of a danger of crash as the results of analysis, when the possibility of the danger is detected.

Also, the image analyzing section 26 performs image analysis of the pixel data in a range specified by the image range designating information, as the image data having lower resolution (image data with half the original resolution in this embodiment), if the image range designating information specifying a range where the total number of pixels is more than 320x240 (=76800) is given, or performs image analysis of the pixel data in a range specified by the image range designating information directly as the obj ect being processed, if the image range designating information specifying a range
where the total number of pixels is 320x240 or less is given.

As will be apparent from the foregoing explanation, the operation of the vehicle-mounted image processor 20 will be described below, sepaxately from the parameters (vehicle speed v, yaw rate ry).

First of all, when u, v and m are all "0", the operation of the vehicle-mounted image processor 20 at the vehicle speed v will be described below.

When u, v and m are all "0", the image processing range specifying section 26 outputs the image range designating information of the content according to only the value of vehicle speed rank n obtained from the vehicle speed v (image range designating information including (-319+40n, 240-30n), (320-40n, 240-30n), (-319+40n, -239+30n), (320-40n, -239+30n) as the coordinates of P, Q, R, S points), as shown in Figures 5A and 5B.

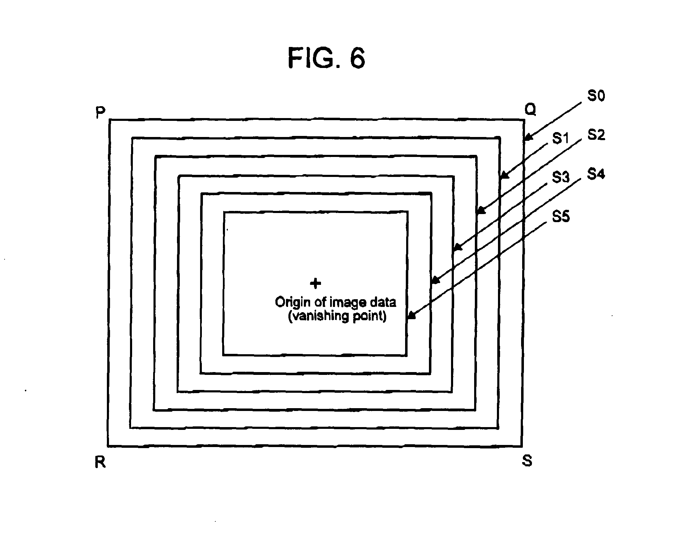

That is, the image range designating information outputted for each vehicle speed rank n by the image processing range specifying section 26 is the information in which the size of image Sn (n is from 0 to 5) to be specified is smaller, as the n value (vehicle speed v) increases, as shown in Figure 6.

The image analyzing section 26 performs image analysis only of the image Sn in the image (image S0 in Figure 6) picked up by the camera 11. As the vehicle speed v increases, the size of a portion where the image regarding an object (other vehicle, guard rail, etc.) possibly having influence on the self vehicle exists in the image picked up by the camera 11 is smaller. Accordingly, there is no problem that a portion not processed for image analysis by the image analyzing section 26 exists in the image picked up by the camera 11. As the n value (vehicle speed v) increases, the size of the image that must be analyzed is smaller (time usable for analyzing one pixel is increased), whereby the image analyzing section 26 can perform all the more detailed analysis because the size of image to be analyzed is smaller.

Next, when u and v are all "0", the operation of the vehicle-mounted image processor 20 for the yaw rate ry will be described below.

When u and v are all "0", the image processing range specifying section 26 outputs the image range designating information in which each X coordinate value is multiplied by (1+m/8) in the image range designating information outputted when u, v and m are all "0" (see Figure 5B) (if each X coordinate value is beyond the maximum/minimum value of X coordinate value after multiplication of (1+m/8), each X coordinate value is replaced with the maximum/minimum value of X coordinate value as will be clear from Figure 4.

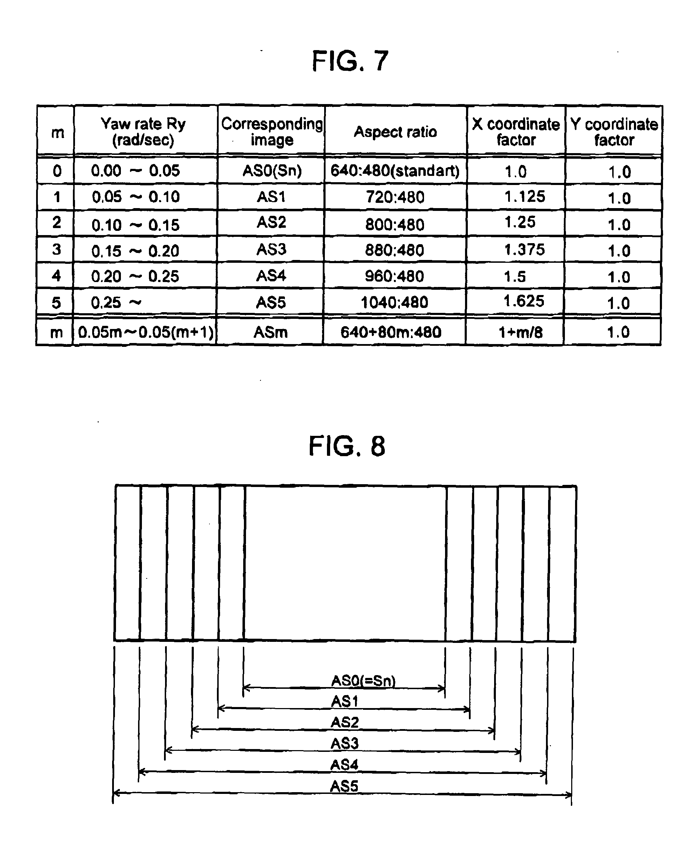

That is, the aspect ratio rank m outputted by the aspect ratio rank specifying section 24 is the information defining the proportional factor (X coordinate factor in Figure 7) by which the X coordinate value is multiplied, as shown in Figure 7. The image range designating information outputted by the image processing range specifying section 26 is matched with Sn when m value is "0", in which as the m value (absolute value of yaw rate ry) increases, the size of the image ASm specified in the transverse direction (X coordinate direction) increases (more correctly the information specifying the clipped image of ASm by the size of image data delivered from the camera 11), as shown in Figures 7 and 8.

In effect, the yaw rate ry of not "0" means that the vehicle is turning to the right or left. When the vehicle is turning to the right or left, it is required to judge the possibility of a danger of crash for the object existing in a broader range than when the vehicle runs straight, whereby as the absolute value of yaw rate ry increases, the size of image data in the transverse direction (X coordinate direction) processed for image analysis is larger.

The vanishing point coordinates (u, v) of not (0, 0) mean that the central point (point with coordinates (0,0)) of image data delivered from the camera 11 is not matched with the point to which the vehicle advances. Therefore, the coordinates regarding fourpoints P, Q, Rand S in the image range designating information are translated parallel by the amount corresponding to the values of vanishing point coordinates (u, v) to make the central point in the range for image analysis coincident with the point to which the vehicle advances (see Figure 4).

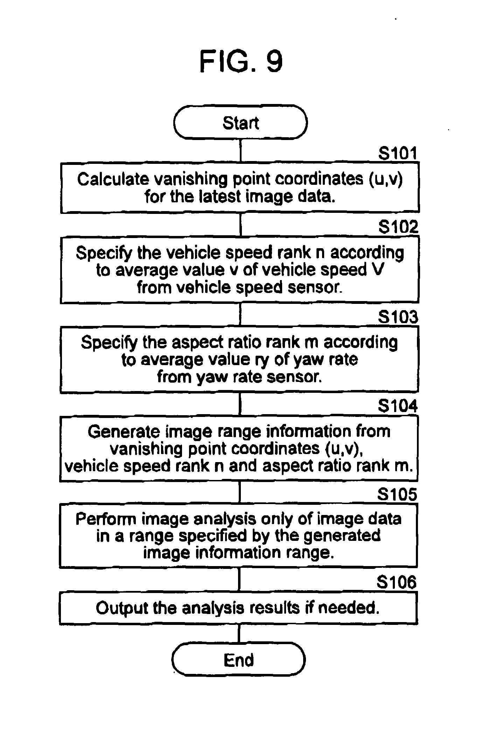

Finally, the operation of the vehicle-mounted image processor 20 as described above using the functional block diagram will be described below using a flowchart of Figure 9. This flowchart represents a procedure for a process repetitively performed by the vehicle-mounted image processor 20 synchronously with the image data output period of the camera 11. In this flowchart, the process for picking up the image data is not represented.

As shown in Figure 9, the vehicle-mounted image processor 20 firstly calculates the vanishing point coordinates (u, v) regarding the latest image data, based on the image data acquired from the camera 11 and stored in the RAM (step S101). Then, the vehicle-mounted image processor 20 specifies the vehicle speed rank n according to the average value v (vehicle speed v) of the vehicle speed v from the speed sensor 12 (step S102) and specifies the yaw rate rankmaccording to the average value ry (yaw rate ry) of yaw rate Ry from the yaw rate sensor 13 (step S103).

That is, the vehicle-mounted image processor 20 calculates the integer value n (if n>5, n=5) in which an inequality "10n≤v<20n" holds for the vehicle speed v [km/h] and storing the vehicle speed rank n, and calculates the integer value m (if m>5, m=5) in which an inequality "0.05m≤ ABS (ry) <0.05(m+1)" holds for the yaw rate ry [rad/sec] and storing the aspect ratio rank m.

Thereafter, the vehicle-mounted image processor 20 generates the image range designating information of the contents as shown in Figure 4 from the vanishing point coordinates (u, v), the vehicle speed rank n and the yaw rate rank m calculated/specified through the foregoing process (step S104). And the control section 21 performs image analysis only of the data in a specified range of the latest image data stored in the RAM, specified by the image range designating information in (step S105), and outputs the results of analysis, if needed (there is danger of crash) (step S106), whereby the procedure shown in Figure 9 is ended.

As described above, in the vehicle-mounted image processor 20, the range (size and position) of image data processed for image analysis changes with the vehicle speed v (if the vehicle speed v increases, the size of image data processed for image analysis is smaller). Accordingly, this vehicle-mounted image processor is an apparatus in which the image analysis can be normally performed, even if the image data delivered from the camera is not converted into lower resolution, that is, image analysis for judging the possibility of a danger, e.g., crash, can be carried out accurately even when the speed of vehicle is high.

### <Second embodiment>

A vehicle-mounted image processor according to a second embodiment of the invention is a variation of the vehicle-mounted image processor 20 according to the first embodiment, in which the process is different at steps S104 and S105 (Figure 9) (the image processing range specifying section 25 and the image analyzing section 26 are different in operation). Therefore in the following, the operation of the vehicle-mounted image processor 20 according to the second embodiment will be described below, mainly regarding the differences from the vehicle-mounted image processor 20 according to the first embodiment, using the same reference numerals as described in the first embodiment.

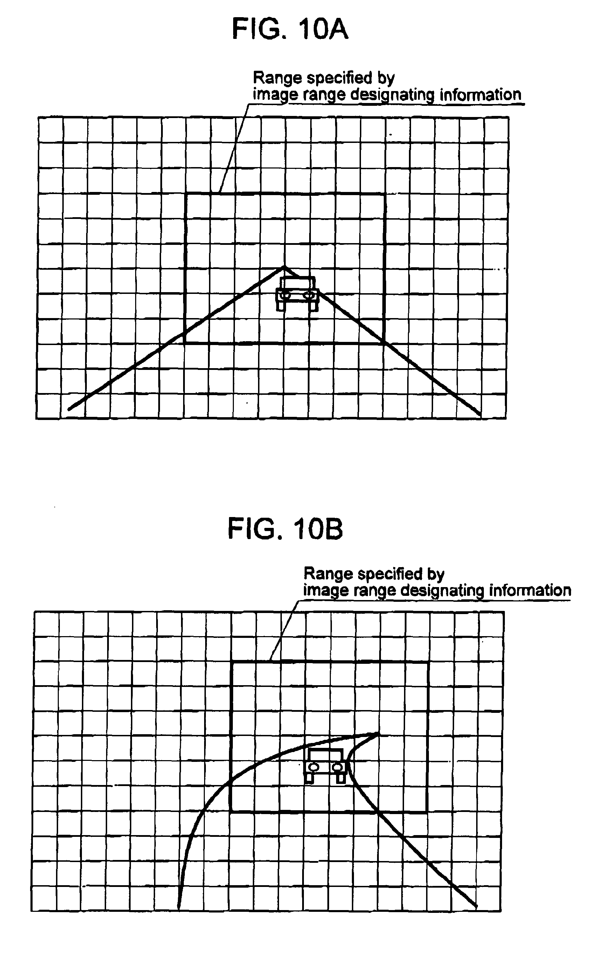

The vehicle-mounted image processor 20 according to the second embodiment (hereinafter designated as the second vehicle-mounted image processor 20), like the vehicle-mounted image processor 20 according to the first embodiment (hereinafter designated as the first vehicle-mounted image processor 20), generates the image range designating information from the vanishing point coordinates (u, v), the vehicle speed rank n, and the yaw rate rank m. The generated image range designating information is the information specifying the image data within the range of specified size around a point to which the vehicle is expected to advance in a predetermined time in the image data acquired from the camera 11, as typically shown in Figures 10A and 10B. That is, the second vehicle-mounted image processor 20 is a device for acquiring the central point coordinates in the range as shown in these drawings by multiplying the vanishing point coordinates (u, v) by a correction factor according to the vehicle speed rank n and the yaw rate rank m.

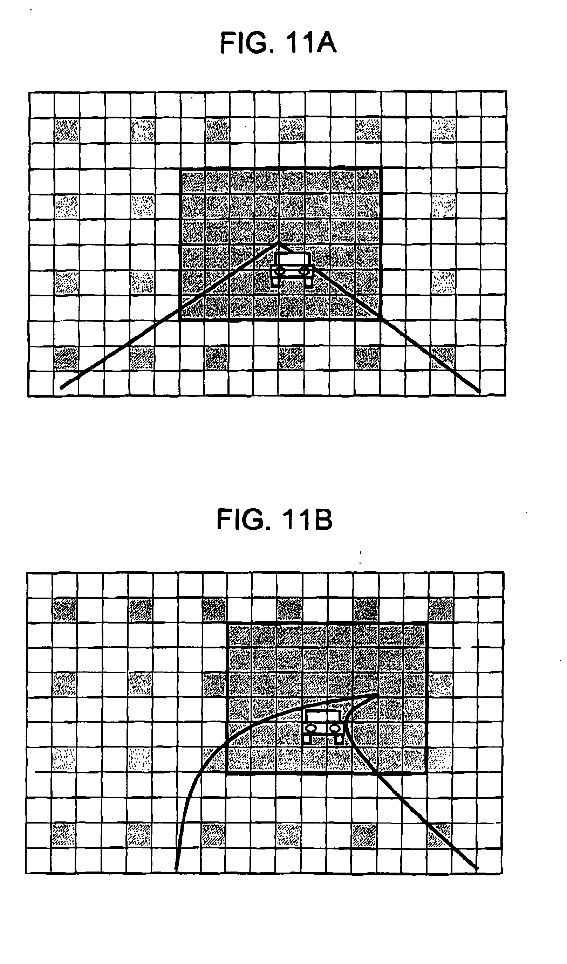

While the first vehicle-mounted image processor 20 performs image analysis only of the image data in the range specified by the image range designating information, the second vehicle-mounted image processor 20 performs image analysis of the image data in the range specified by the image range designating information, as the image data with the second resolution (equivalent to the resolution of the image data delivered from the camera 11 in this embodiment), and image analysis of the image data out of the range specified by the image range designating information, as the image data with the first resolution lower than the second resolution (equivalent to one-third the resolution of the image data delivered from the camera 11 in this embodiment), as typically shown in Figures 11A and 11B. In Figures 11A and 11B, the pixel being actually processed for image analysis is meshed.

In this manner, the vehicle-mounted image processor 20 according to the second embodiment performs image analysis of an important portion of the image data (image data within the range specified by the image range designating information) for the image data with higher resolution than image analysis of the other portion. Accordingly, this vehicle-mounted image processor 20 operates as a device that can perform image analysis without converting the important portion of the image data into lower resolution, namely, perform image analysis for judging the possibility of a danger, e.g., crash, more accurately than the conventional apparatus.

### <Modified embodiment>

The foregoing vehicle-mounted image processor 20 may be modified in various ways. For example, the vehicle-mounted image processor 20 according to the first and second embodiments may be modified to input data regarding the pitching angle of the vehicle (inclination in the forward or backward direction) or the roll angle (vehicle inclination in the left or right direction) (generate the image range designating information according to the pitching angle or the roll angle of vehicle) . Also, the vehicle-mounted image processor 20 according to the first and second embodiments may be modified into the apparatus not intended to prevent collision. When the vehicle-mounted image processor 20 according to the first embodiment is modified into the apparatus not intended to prevent collision, the yaw rate Ry may not be inputted.

## Claims

1. A vehicle-mounted image processor mounted on a vehicle, together with a camera for periodically delivering the image data regarding a landscape image in a direction where the vehicle advances, comprising:
image data storage means for storing a specified volume of image data delivered from said vehicle-mounted camera;
image analyzing means for performing image analysis only of the image data in a specified range of the latest image data stored in said image data storage means; and
processing object control means for allowing said image analyzing means to grasp the moving speed of said vehicle, to specify an object being processed such that the size and the position thereof has a negative correlation with the moving speed of said vehicle in the image data stored in said image data storage means, and to perform image analysis on the image data in the specified range.

2. The vehicle-mounted image processor according to claim 1, wherein said processing object control means allows said image analyzing means to perform image analysis of the image data in a specified range of said image data for each range of said moving speed.

3. The vehicle-mounted image processor according to claim 1 or 2, wherein said processing object control means allows said image analyzing means to grasp an average value of the moving speed of said vehicle, to specify an object being processed such that the size and the position thereof has a negative correlation with the average value of the moving speed of said vehicle in the image data stored in said image data storage means, and to perform image analysis on the image data in the specified range.

4. The vehicle-mounted image processor according to claim 1 or 2, wherein said processing object control means allows said image analyzing means to grasp the yaw rate and the moving speed of said vehicle, to specify an object being processed such that the vertical size has a negative correlation with the moving speed of said vehicle, and the horizontal size has a positive correlation with the yaw rate of said vehicle in the image data stored in said image data storage means, and to perform image analysis on the image data in the specified range.

5. A vehicle-mounted image processor mounted on a vehicle, together with a camera for periodically delivering the image data regarding a landscape image in a direction where the vehicle advances, comprising:
image data storage means for storing a specified volume of image data delivered from said vehicle-mounted camera;
image analyzing means for performing a first image analysis of the latest image data stored in said image data storage means as the image data with a first resolution lower than the actual resolution, and a second image analysis of the image data in a specified range of the image data as the image data with a resolution lower than or equal to the actual resolution and higher than said first resolution; and
processing object control means for allowing said image analyzing means to grasp the advancing direction of said vehicle, and perform said first image analysis of the latest image data stored in said image data storage means and said second image analysis of the image data in a range according to the grasped advancing direction.
